# FASCICULE DE BREVET EUROPEEN

(11) **EP 1 200 667 B1**
(45) Date de publication et mention de la délivrance du brevet: **18.08.2004**
(21) Numéro de dépôt: 00951646.9
(22) Date de dépôt: 11.07.2000
(51) Int. Cl.: D06N 5/00, E04D 5/02, B32B 27/12, D06N 3/04

(54) **REVETEMENT D'ETANCHEITE**
DICHTUNGSBAHN
BUILT-UP ROOFING

(30) Priorité: 30.07.1999 FR 9910146
(43) Date de publication de la demande: 02.05.2002
(73) Titulaire: TEXTILES ET PLASTIQUES CHOMARAT, 07160 Le Cheylard (FR)
(72) Inventeur: BACCUS, Gérard, F-07160 Accons (FR); SANIAL, Philippe, F-07160 Le Cheylard (FR); CLEDAT, Bruno, F-07160 Le Cheylard (FR)
(74) Mandataire: Vuillermoz, Bruno
(86) Numéro de dépôt international: PCT/FR2000/001993
(87) Numéro de publication internationale: WO 2001/009429

(56) Documents cités:
- EP-A- 0 315 553
- CH-A- 619 642
- DE-U- 8 705 654
- GB-A- 1 228 592
- US-A- 2 638 638
- US-A- 4 173 675
- US-A- 4 457 983
- PATENT ABSTRACTS OF JAPAN vol. 1995, no. 02, 31 mars 1995 (1995-03-31) & JP 06 305061 A (IG TECH RES INC), 1 novembre 1994 (1994-11-01)

## Description

### Domaine Technique

La présente invention concerne un nouveau type de matériau utilisable pour la réalisation de revêtements d'étanchéité, notamment dans le domaine du bâtiment, assurant non seulement l'étanchéité mais également l'isolation des toitures, matériau couramment désigné dans ce secteur technique sous la dénomination « roofing ».

### Techniques antérieures

A ce jour, pour réaliser des revêtements d'étanchéité, deux grands types de matériaux sont utilisés.

Le plus répandu est constitué par les revêtements à base de bitume comprenant une structure de renforcement noyée dans la composition de bitume, conférant à l'ensemble les caractéristiques mécaniques, la stabilité dimensionnelle et la résistance au poinçonnement tant statique que dynamique que doivent posséder de tels revêtements.

La structure générale de tels matériaux ressort notamment des brevets US 3 193 439 et 3 937 640. En général, ces revêtements sont, de nos jours, posés sur la structure à recouvrir selon la technique dite « monocouche », en déroulant et fixant sur la surface de la structure des bandes continues dont la longueur peut atteindre plusieurs dizaines de mètres et dont la largeur est en général comprise entre 0,50 m et 2 m, la fixation pouvant être réalisée soit mécaniquement, soit en chauffant la composition de bitume, ou bien encore en ayant une composition de bitume autocollante ou une colle à froid.

Dans tous les cas, le raccord entre deux bandes consécutives implique de réaliser une soudure à ce niveau soit par air chaud, soit par chauffage à la flamme.

Outre ce type de matériau, il a également été proposé d'utiliser des membranes réalisées à partir d'un polymère synthétique en général à base de chlorure de polyvinyle et parfois à base d'un élastomère du type terpolymère d'éthylène diène (EPDM) ou toute autre composition équivalente.

De tels revêtements présentent l'avantage de pouvoir faire varier à volonté l'aspect de surface et notamment la couleur.

Cependant, par rapport aux membranes à base de bitume, de tels produits sont très onéreux.

Il a également été proposé, comme cela ressort de l'US-A-4 457 983, de réaliser un complexe pour revêtements d'étanchéité de toiture, qui comprend une couche de surface constituée par une feuille de résine thermoplastique choisie dans la famille des polyoléfines (EVA), associée à une couche intermédiaire fibreuse tel qu'un nontissé et à une sous-couche constituée par une feuille conventionnelle d'asphalte.

### Exposé de l'invention

Or on a trouvé, et c'est ce qui fait l'objet de la présente invention, un perfectionnement au type de matériau complexe utilisable pour la réalisation de revêtements étanches tels que décrits dans le brevet US 4 457 983 précité, qui permet d'améliorer les caractéristiques que présente un tel matériau.

En effet, le nouveau matériau conforme à l'invention présente à la fois les avantages qu'apportent les membranes réalisées à partir de polymère synthétique, à savoir l'aspect, la coloration, la résistance aux agressions chimiques et industrielles, la tenue au rayonnement ultraviolet et les possibilités de grainage du produit et ceux des membranes à base de bitume, à savoir les qualités de résistance mécanique, résistance au poinçonnement dynamique et statique, et de facilité de pose.

D'une manière générale, le matériau conforme à l'invention qui permet donc la réalisation de tels revêtements d'étanchéité, comprend un support textile (T) et recouvert, sur l'une de ses faces, d'une couche de surface, intimement liée à ce dernier et constituée par une résine synthétique, ladite couche de surface étant à base de résines thermoplastiques choisies dans la famille des polyoléfines, aptes à être mises sous forme de feuilles.

Le matériau selon l'invention se **caractérise** en ce que :
· ladite couche de surface est à base de polymères ou copolymères de l'éthylène, son association avec le support textile étant réalisée par calandrage, ce dernier étant noyé sur une partie de son épaisseur à l'intérieur de la couche de résine ;
· le support textile comporte sur sa face envers une feuille métallique mince en aluminium ;
· il comporte une couche de composition de bitume rapportée contre cette feuille métallique.

Selon une forme de réalisation, la couche de surface à base de polymère synthétique s'étend sur toute la largeur du support textile.

Par ailleurs, selon une forme préférentielle de réalisation, une bande textile constituée par un nontissé, de préférence un nontissé constitué de filaments continus réalisés selon la technique connue de filage/étirage/nappage dite « spunbond », est prévue le long d'un bord du complexe, rapportée sur la couche de résine et liée par cette dernière sur une largeur comprise en général entre 10 et 20 cm.

Une telle structure permet, lors de la réalisation de revêtement sur le site, de faciliter la soudure entre deux bandes consécutives au niveau de leur raccordement.

Selon l'invention, avant imprégnation de bitume, on rapporte sur la face envers du complexe, c'est-à-dire contre la surface du support textile, une feuille d'aluminium solidarisée à cette face par collage, la composition à base de bitume étant rapportée contre la surface d'aluminium et ne pénétrant donc pas dans la structure fibreuse.

L'incorporation d'une telle feuille d'aluminium dans le complexe, incorporation connue depuis fort longtemps pour la réalisation de couvertures de toiture comme cela ressort du brevet français 1 205 703 ainsi que du brevet US 4 287 248, apporte des avantages additionnels parmi lesquels on peut citer une amélioration de l'isolation, et surtout une étanchéité améliorée évitant la migration des plastifiants du bitume vers la couche de surface.

Lorsque le complexe comporte un renfort latéral noyé en partie dans l'enduction de surface, ce dernier sert d'interface d'accrochage au bitume lorsque celui-ci imprègne la structure textile, et joue également le rôle de protection lors de la soudure à la flamme.

Le support textile entrant dans la réalisation d'un complexe selon l'invention, sera constitué de toute structure utilisable dans le domaine des renforcements d'étanchéité, telle que décrite dans le brevet français 2 562 471 et les brevets EP 160609, EP 285533, EP 315553, et d'une manière générale, comportera au moins une nappe fibreuse associée à une grille textile, la nature des constituants de la structure fibreuse et de la grille de renforcement pouvant être à base de verre et/ou en polymère synthétique tel que polyester, polyamide, polyvinyle acétate, polypropylène.

Un tel complexe sera obtenu conformément aux enseignements des brevets précités par collage (FR 2 562 471), aiguilletage mécanique (EP 160609), traitement par jets de fluide (EP 285533 et 315553).

En pratique, les couches de surface à base de résines synthétiques auront une épaisseur comprise entre 0,5 mm et 2 mm, le support textile ayant quant à lui une épaisseur de 0,2 mm à 1,5 mm et pesant entre 30 g/ m² et 500 g/m².

L'association support textile/film est réalisée par calandrage immédiatement en aval d'un ensemble extrudant le polymère.

Une telle association est réalisée conformément aux enseignements du brevet EP 208627en utilisant une calandre comportant un cylindre en métal (lisse ou grainé), et un cylindre revêtu d'une couche de caoutchouc siliconé.

Cette association est réalisée immédiatement en aval de la sortie de la filière d'extrusion du film, alors que ce dernier est encore à température élevée de l'ordre de 170 à 180°C pour un film à base de polyéthylène.

Une telle manière de procéder permet donc d'obtenir une structure comme cela ressort de l'EP 208627, où la résine ne pénètre que partiellement dans l'épaisseur du support textile.

Dans l'invention selon laquelle une feuille métallique, aluminium froissé ou martelé par exemple, est rapportée sur la face envers du support textile, cette feuille peut être rapportée soit lors d'une opération préalable à l'opération de complexage avec la couche de surface, soit lors de cette opération de complexage.

### Description sommaire des dessins

L'invention et les avantages qu'elle apporte seront cependant mieux compris grâce aux exemples de réalisation qui suivent et qui sont illustrés par les schémas annexés dans lesquels :
- la figure 1 est une vue schématique en perspective d'un matériau complexe conforme à l'invention (où la feuille d'aluminium et la couche de bitume ne sont pas représentées) utilisable pour réaliser un revêtement d'étanchéité ;
- la figure 2 illustre, de manière schématique, la manière dont est réalisée l'opération de mise en place du revêtement et ;
- la figure 3 est une vue schématique en perspective illustrant la technique de réalisation du complexage.

### Manière de réaliser l'invention

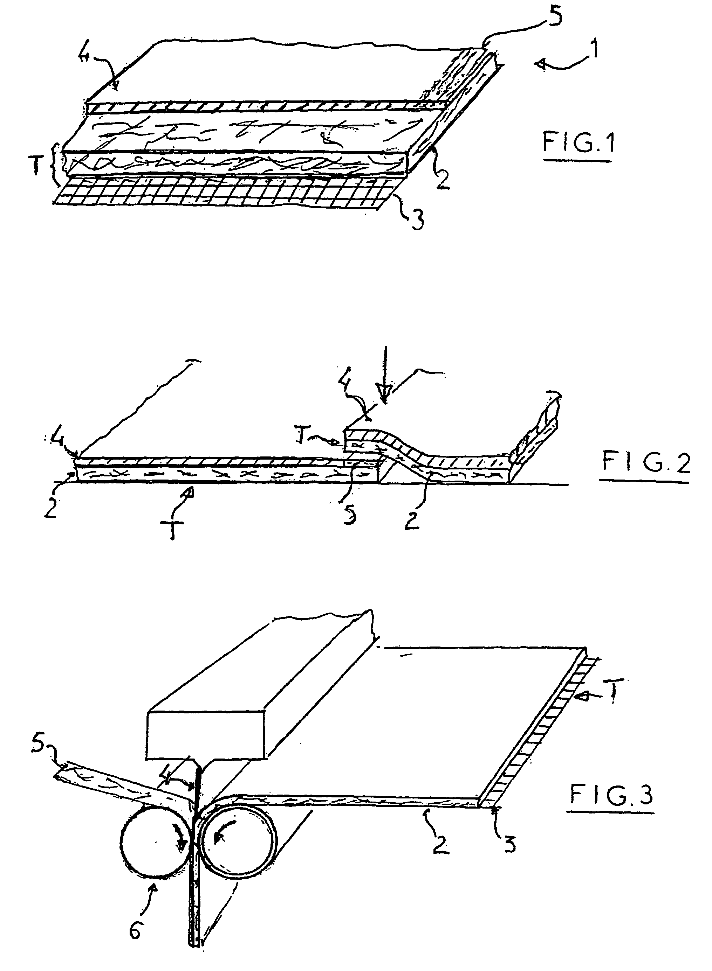

Si l'on se reporte aux figures annexées, et plus particulièrement à la figure 1, le matériau conforme à l'invention, qui est utilisé pour la réalisation de revêtements d'étanchéité, comprend un support textile (T), ledit support textile (T) comprenant au moins une nappe fibreuse non tissée (2), associée à un renfort (3) tel que notamment une grille tissée ou non tissée.

Eventuellement, la structure de renforcement (3) peut également être recouverte d'une seconde nappe fibreuse, les différentes couches étant liées entre elles par tout moyen approprié, tel que collage, liage par couture, aiguilletage conventionnel ou traitement par jets de fluide (liage hydraulique).

A ce support textile (T) est associée une feuille métallique mince, par exemple un film d'aluminium qui peut être déposé soit contre la face envers de la structure textile (T), soit éventuellement noyé dans cette dernière, par exemple entre la grille de renfort (3) et la structure textile (2).

Ce support textile (T) est associé à une couche dé surface (4) destinée à former la couche de surface du revêtement après sa pose sur le site. Cette couche de surface (4) est réalisée à partir de résines thermoplastiques aptes à être mises sous forme de 'feuilles, choisies dans la famille des polyoléfines et plus particulièrement à base de polymères ou copolymères d'éthylène présentant une très bonne résistance aux rayons ultraviolets et aux agressions chimiques.

L'association de la couche de surface (4) avec le support textile (T) est réalisée par calandrage (voir figure 3), le support textile (T) étant noyé sur une partie de son épaisseur à l'intérieur de la couche de résine lors de cette opération de calandrage.

Avantageusement, pour faciliter la jonction ultérieure de deux bandes consécutives après pose sur la zone à protéger, un renfort latéral (5) est noyé dans l'enduction de surface (4). Un tel renfort est avantageusement constitué par un nontissé de type « spunbond » associé à la couche de résine (4) lors de l'opération de complexage en étant amené au niveau du cylindre lisse (6) de la calandre.

En général, conformément à l'invention, la couche de surface (4) a une épaisseur comprise entre 0,2 mm et 1,2 mm.

Lorsque la structure textile (T) comporte, sur sa face envers une feuille métallique mince, la composition à base de bitume est déposée contre la surface de cette feuille métallique et adhère à cette dernière.
Le support textile de renforcement sera, comme dit précédemment, constitué d'un non tissé associé à un renfort tel qu'une grille. Avantageusement, les constituants de ce non tissé et de la grille seront des fibres de verre.

Pour améliorer la résistance aux poinçonnements, il peut être envisagé d'utiliser un complexe verre/nappe de polyester, les fibres de polyester étant cependant emprisonnées à l'intérieur des couches de verre.

La grille de verre apporte la stabilité dimensionnelle, les caractéristiques mécaniques, la résistance aux poinçonnements et aux charges.

Eventuellement, cette structure non tissée qui avantageusement est en verre, peut comporter des fibres ou une enduction chimique de même nature que l'enduit superficiel qui favorisent l'accrochage et l'adhérence des produits entre eux.

Enfin, pour la mise en place, la présence sur l'un des bords du complexe d'une bande non tissée, sert de renfort mécanique lors du recouvrement de deux bandes consécutives réalisées tel qu'illustré à la figure 2.

Le recouvrement ainsi réalisé présente une parfaite étanchéité entre deux bandes consécutives et élimine tout risque de filtration d'eau.

### Exemple 1 (ne fait pas partie de l'invention)

On réalise une structure (T) comportant comme support textile (T), une nappe non tissée (2) constituée d'un voile de verre pesant 35 g/m2 et recouverte sur sa face inférieure d'une grille constituée également de fils de verre, les jours de cette grille étant de 0,5 cm de côté. Cette grille est simplement collée sur la face envers du voile (2).

Sur une installation telle qu'illustrée à la figure 3, on associe le complexe (T) à un film obtenu à partir d'une composition de polyoléfine, à une température de 180°C.

Une bande (5), de 10 cm de largeur, constituée d'un nontissé de type « spunbond » en verre, est rapportée latéralement sur la face envers du film extrudé, en contact avec le cylindre (6) de la calandre.

Après calandrage, on obtient un complexe dont les différentes couches sont parfaitement liées entre elles. Ce complexe est ensuite enduit, côté de sa face textile d'une composition de bitume déposé à raison de 3500 g/m². L'ensemble, après imprégnation de bitume, a une épaisseur de 4 mm.

### Exemple 2 (ne fait pas partie de l'invention)

On répète l'exemple 1, si ce n'est que la structure (T) comporte deux voiles de polyester disposés de part et d'autre de la grille textile (3), les couches étant liées entre elles par aiguilletage au moyen de jets de fluide.

Après complexage avec un film (4) similaire à l'exemple 1, on obtient une structure dont la masse fibreuse peut être imprégnée d'une composition de bitume sans aucune détérioration de l'aspect des caractéristiques de la couche de surface constituée par la résine synthétique.

### Exemple 3

On répète les exemples 1 et 2 si ce n'est que l'on associe la structure (T) à une feuille d'aluminium, de préférence martelée, cette feuille d'aluminium étant disposée soit directement contre la grille textile de renfort (3) soit interposée entre la grille textile de renfort (3) et le voile (2).

Ce film métallique est associé à la structure (T), par exemple par collage.

Dans un tel mode de réalisation selon l'invention, la composition de bitume est rapportée contre la surface d'aluminium et ne pénètre donc pas à coeur dans la structure fibreuse.

Une telle forme de réalisation, plus coûteuse et plus complexé que celle réalisée par les exemples 1 et 2, présente comme avantage d'apporter une amélioration au niveau de la résistance à la migration des liants du bitume, évitant toute détérioration de la couche de surface (4).

Par rapport aux solutions antérieures, le matériau conforme à l'invention présente de nombreux avantages par le fait qu'il possède à la fois les caractéristiques des revêtements d'étanchéité à base de bitume, et celles des membranes réalisées à partir d'un polymère synthétique, et plus particulièrement l'aspect et le décor que permettent d'obtenir de telles membranes, tout en étant d'un coût de production raisonnable.

## Revendications

1. Matériau permettant la réalisation de revêtements d'étanchéité, comprenant un support textile (T) recouvert, sur l'une de ses faces, d'une couche de surface (4), intimement liée à ce dernier, et constituée par une résine synthétique, ladite couche de surface (4) étant à base de résines thermoplastiques choisies dans la famille des polyoléfines, aptes à être mises sous forme de feuilles, **caractérisé en ce que** :
· ladite couche de surface (4) est à base de polymères ou copolymères de l'éthylène, son association avec le support textile (T) étant réalisée par calandrage, ce dernier étant noyé sur une partie de son épaisseur à l'intérieur de la couche de résine (4) ;
· le support textile comporte sur sa face envers une feuille métallique mince en aluminium ;.
· il comporte une couche de composition de bitume rapportée contre cette feuille métallique.

2. Matériau selon la revendication 1, **caractérisé en ce** la couche de surface (4) s'étend sur toute la largeur du support textile (T), une bande textile (5) constituée par un non-tissé étant rapportée sur la couche de résine le long d'un bord du complexe et étant liée par cette dernière.

3. Matériau selon la revendication 1, **caractérisé en ce que** le support textile (T) comporte au moins une nappe fibreuse (2) associée à une grille textile (3) à base de verre et/ou en polymère synthétique, tel que polyester, polyamide, polyvinyle acétate, polypropylène.

## Patentansprüche

1. Material, das die Herstellung von Abdichtungsbelägen ermöglicht, einen textilen Träger (T) umfassend, der auf einer seiner Flächen mit einer Oberflächenschicht (4) bedeckt ist, die mit dem Träger eng verbunden ist und aus einem Kunstharz besteht, wobei die Oberflächenschicht (4) auf der Basis von thermoplastischen Kunststoffen hergestellt ist, die aus der Gruppe der Polyolefine ausgewählt sind, die sich dazu eignen, in die Form von Folien gebracht zu werden, **dadurch gekennzeichnet, dass**:
• die Oberflächenschicht (4) auf der Basis von Ethylenpolymeren oder Ethylencopolymeren hergestellt ist, wobei ihre Verbindung mit dem textilen Träger (T) durch Walzen erfolgt, wobei Letzterer über einen Teil seiner Dicke im Inneren der Harzschicht (4) eingebettet ist;
• der textile Träger auf seiner Rückseite eine dünne Metallfolie aus Aluminium umfasst;
• es eine Schicht aus Bitumenzusammensetzung, die an dieser Metallfolie anliegt, umfasst.

2. Material nach Anspruch 1, **dadurch gekennzeichnet, dass** sich die Oberflächenschicht (4) über die gesamte Breite des textilen Trägers (T) erstreckt, wobei eine aus einem Vlies bestehende Stoffbahn (5) auf die Harzschicht entlang eines Randes des Verbunds aufgebracht und durch diese eingebunden ist.

3. Material nach Anspruch 1, **dadurch gekennzeichnet, dass** der textile Träger (T) mindestens eine Fasermatte (2) umfasst, die mit einem textilen Gitter (3) auf der Basis von Glas und/oder aus synthetischem Polymer wie Polyester, Polyamid, Polyvinylacetat, Polypropylen, verbunden ist.

## Claims

1. A material for producing membrane roofing sheets, comprising a textile backing (T) covered, on one of its sides, with a top layer (4) intimately bonded to the latter and consisting of a synthetic resin, said top layer (4) being based on thermoplastic resins, chosen from the polyolefin family, which can be made in sheet form, **characterized in that** :
- said top layer (4) is based on ethylene polymers or copolymers, it being combined with the textile backing (T) by calendering, this backing being embedded over part of its thickness within the resin layer (4) ;
- the textile backing (T) comprises on its reverse side a thin metal foil made of aluminum ;
- it comprises a layer of a bitumen composition, said bitumen composition being attached to this metal foil.

2. The material as claimed in claim 1, **characterized in that** the top layer (4) extends over the entire width of the textile backing (T), a textile tape (5) consisting of a nonwoven being attached to the resin layer along one edge of the complex and being bonded by the resin layer.

3. The material as claimed in claim 1, **characterized in that** the textile backing (T) comprises at least one fibrous web (2) combined with a textile mesh (3) based on glass and/or on a synthetic polymer, such as a polyester, polyamide, polyvinyl acetate or polypropylene.
